(19) **Europäisches Patentamt**
**European Patent Office**
**Office européen des brevets**

(11) **EP 4 668 424 A1**

(12) **EUROPEAN PATENT APPLICATION**
published in accordance with Art. 153(4) EPC

(43) Date of publication:
**24.12.2025 Bulletin 2025/52**

(21) Application number: **24756707.6**

(22) Date of filing: **02.02.2024**

(51) International Patent Classification (IPC):
*H01M 50/131* (2021.01)   *B32B 7/02* (2019.01)
*B32B 27/32* (2006.01)   *H01M 10/052* (2010.01)
*H01M 10/0562* (2010.01)   *H01M 50/105* (2021.01)
*H01M 50/121* (2021.01)   *H01M 50/129* (2021.01)
*H01M 50/184* (2021.01)

(52) Cooperative Patent Classification (CPC):
**B32B 7/02; B32B 27/32; H01M 10/052;
H01M 10/0562; H01M 50/105; H01M 50/121;
H01M 50/129; H01M 50/131; H01M 50/184;
H01M 50/193; H01M 50/198;** Y02E 60/10

(86) International application number:
**PCT/JP2024/003552**

(87) International publication number:
**WO 2024/171857 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **17.02.2023   JP 2023023503**

(71) Applicant: **Toppan Holdings Inc.**
**Tokyo 110-0016 (JP)**

(72) Inventors:
• **IMAMOTO Junya**
**Tokyo 110-0016 (JP)**
• **MURATA Koji**
**Tokyo 110-0016 (JP)**

(74) Representative: **Hoffmann Eitle**
**Patent- und Rechtsanwälte PartmbB**
**Arabellastraße 30**
**81925 München (DE)**

(54) **COVERING MATERIAL FOR POWER STORAGE DEVICE AND POWER STORAGE DEVICE**

(57)   The disclosure provides a packaging material for a power storage device including at least a substrate layer, a barrier layer, an adhesive layer, and a sealant layer in this order, wherein the hydrogen sulfide gas permeability at 100°C in the thickness direction of the sealant layer and the adhesive layer is $3.7 \times 10^{-15}$ to $1.8 \times 10^{-12}$ [(mol·m)/(m²·s·Pa)].

FIG.1

EP 4 668 424 A1

**Description**

[Technical Field]

The present disclosure relates to packaging materials for a power storage device, and power storage devices.

[Background Art]

Known examples of power storage devices include secondary batteries, such as lithium ion batteries, nickel-metal hydride batteries, and lead batteries, and electrochemical capacitors, such as electric double layer capacitors. Due to miniaturization of mobile devices, limitation of installation spaces, or the like, power storage devices are required to be further miniaturized, and thus attention is being given to lithium ion batteries for their high energy density. Metal cans have been used as packaging materials for lithium-ion batteries; however, there is a growing trend of using multilayer films as such packaging materials because they are lightweight, highly heat dissipating, and can be produced at low cost.

Lithium ion batteries using the above multilayer films as packaging materials are referred to as laminated lithium ion batteries. Such a laminated lithium ion battery includes a power storage element including a positive electrode, a liquid electrolyte, and a negative electrode, and a packaging bag accommodating the power storage element to prevent penetration of moisture into the interior. The packaging bag includes a packaging material in which a substrate layer, a barrier layer, an adhesive layer, and a sealant layer are provided in this order. The packaging material covers the power storage element, with the sealant layer facing inside and the substrate layer facing outside. Laminated lithium ion batteries are each produced by, for example, forming a recess in a portion of the packaging material by cold forming, accommodating the power storage element in the recess, folding back the remaining portion of the packaging material, and heat-sealing the edges (e.g., see PTL 1).

[Citation List]

[Patent Literature]

PTL 1: JP2013-101765A

[Summary of the Invention]

[Technical Problem]

Power storage devices which are referred to as solid-state batteries are under research and development as next generation batteries replacing lithium ion batteries. Such solid-state batteries may be accommodated in device containers. A solid-state battery includes a packaging bag accommodating the power storage element, while the packaging bag is formed using a packaging material so as to have a seal portion around the periphery of the bag body. The seal portion refers to a portion in which surfaces of the sealant layer of the packaging material are integrated by being brought into contact with each other and heat-sealed. The power storage element is held in the device container, being pressurized via the packaging bag, in order to increase conductivity of the solid-state battery. In this case, the power storage element is desired to be uniformly pressurized in order to efficiently operate the solid-state battery.

However, it has been found that the seal portion of the solid-state battery contracts after being subjected to a thermal shock in which the ambient temperature rises and falls between -40°C and 100°C. If the seal portion contracts, the gap between the inner wall of the device container and the seal portion may increase, resultantly allowing the solid-state battery to easily move inside the device container due to vibration or the like. It is considered that if the solid-state battery is displaced from a fixed position, the solid-state battery is not necessarily uniformly pressurized, and the output efficiency may decrease.

Even when the power storage device is not a solid-state battery, this undesirable displacement of the power storage device from the fixed position inside the device container due to vibration or the like may raise an issue of possible disconnection of the wirings connected to the power storage device.

For this reason, there has been a need for a packaging material for a power storage device, which is able to improve dimensional stability of the seal portion formed of the packaging material, even after a thermal shock.

The present disclosure has been made in light of the issues set forth above and aims to provide a packaging material for a power storage device which can improve dimensional stability of the seal portion formed of the packaging material even after a thermal shock, and to provide a power storage device.

[Solution to Problems]

The inventors of the present disclosure have conducted extensive research in order to solve the issues set forth above. In order to improve the dimensional stability of the seal portion formed of a packaging material after a thermal shock, it is important for the seal portion to disperse the stress acting in the direction of contraction due to the thermal shock (to have stress relaxation properties). However, it has been found that, an excessively soft seal portion (seal portion having excessively high stress relaxation properties) cannot retain its shape at high temperatures and contracts, and therefore the rigidity of the seal portion is also important. That is, in order to improve the dimensional stability of the seal portion against a thermal shock, it is important to balance the rigidity required to maintain the constant shape and the stress relaxation properties. In this regard, the inventors of the present disclosure conducted diligent studies in order to balance the rigidity and the stress relaxation properties of the seal portion. As a result, the inventors of the present disclosure have concluded that the dimensional stability of the seal portion can be improved even after a thermal shock, by setting the hydrogen sulfide gas permeability at 100°C in the thickness direction of the sealant layer and the adhesive layer within a specific range, in a packaging material for a power storage device in which a substrate layer, a barrier layer, an adhesive layer, and a sealant layer are provided in this order, and this led to the present disclosure.

Specifically, an aspect of the present disclosure provides a packaging material for a power storage device including at least a substrate layer, a barrier layer, an adhesive layer, and a sealant layer in this order, wherein the hydrogen sulfide gas permeability at 100°C in the thickness direction of the sealant layer and the adhesive layer is $3.7 \times 10^{-15}$ to $1.8 \times 10^{-12}$ [(mol·m)/(m$^2$·s·Pa)].

According to the above packaging material for a power storage device, dimensional stability of the seal portion formed of the packaging material can be improved even after a thermal shock.

The inventors of the present disclosure speculate that the reasons why such an effect is achieved are as follows.

Specifically, first, the hydrogen sulfide permeability is considered to decrease if the sealant layer and the adhesive layer are excessively hard, and increase if they are excessively soft (if the stress relaxation properties become excessively high).

Accordingly, the inventors of the present disclosure speculate that, if the hydrogen sulfide gas permeability in the sealant layer and the adhesive layer is specified within a suitable range, rigidity may be balanced with stress relaxation properties in the seal portion even when the seal portion has received a thermal shock, and that consequently contraction of the seal portion may be suppressed and dimensional stability of the seal portion may be improved. In particular, it is considered that, under a high temperature environment of 100°C, the mobility of molecules constituting the sealant layer and the adhesive layer may increase the hydrogen sulfide gas permeability, and therefore the hydrogen sulfide gas permeability at 100°C may easily reflect the degree of rigidity or stress relaxation properties of the seal portion.

In the packaging material for a power storage device, when a cross section of the sealant layer is observed using a scanning electron microscope, a sea-island structure having a sea area and islands in the sea area is preferably observed.

In this case, dimensional stability of the seal portion formed of the packaging material can be easily improved even when the seal portion has received a thermal shock because, during contraction of the seal portion after the thermal shock, the contraction stress is efficiently relaxed at the interface between the sea area and each of the islands of the sea-island structure.

In the packaging material for a power storage device, the sealant layer may contain a base resin (A) comprising a polyolefin resin.

In the packaging material for a power storage device, the polyolefin resin preferably comprises a polypropylene resin and a polyethylene resin.

In this case, rigidity is imparted to the seal portion by the polypropylene resin, while elasticity (stress relaxation properties) is imparted thereto by the polyethylene resin, and therefore during contraction of the seal portion after a thermal shock, the contraction can be suppressed.

In the packaging material for a power storage device, the sealant layer is preferred to further contain a compatibilizer (B) having portions compatible with the polypropylene resin and portions compatible with the polyethylene resin.

In this case, since the compatibilizer (B) has portions compatible with the polypropylene resin and portions compatible with the polyethylene resin, the polyethylene resin is easily and finely dispersed in the polypropylene resin. Consequently, during contraction of the seal portion after a thermal shock, the contraction stress is effectively relaxed, and thus the seal portion is effectively suppressed from undergoing contraction.

In the packaging material for a power storage device, the compatibilizer (B) is preferred to comprise at least either of a block copolymer (B1) of polypropylene and polyethylene and a block copolymer (B2) of polyethylene and polyethylenebutylene.

In this case, the polyethylene resin is effectively and more finely dispersed in the polypropylene resin. Consequently, during contraction of the seal portion after a thermal shock, the contraction stress is more effectively relaxed, and thus the seal portion is more effectively suppressed from undergoing contraction.

In the packaging material for a power storage device, the content of the compatibilizer (B) in the sealant layer is preferred to be 2 to 30 mass%.

In this case, rigidity can be effectively balanced with elasticity, and if when the seal portion may contract after a thermal shock, the contraction stress can be more effectively relaxed, and thus contraction of the seal portion can be more effectively suppressed.

Another aspect of the present disclosure provides a power storage device including a power storage element; and a packaging bag accommodating the power storage element, wherein the packaging bag is formed using the packaging material for a power storage device described above, so as to have a bag body and a seal portion provided to the bag body.

According to the above power storage device, even when the seal portion of the packaging bag has received a thermal shock, dimensional stability of the seal portion is improved. Therefore, even when a power storage device receives a thermal shock after being accommodated in a device container, the gap between the seal portion of the packaging bag of the power storage device and the inner surface of the device container is less likely to increase. Consequently, even when vibration or the like is applied, the power storage device is less likely to be displaced from the fixed position in the device container. Consequently, when wiring or the like is connected to the power storage device, disconnection of the wiring or the like is suppressed.

The above power storage device may be a solid-state battery.

In this case, even when vibration or the like is applied to the power storage device after being accommodated in the device container in a pressurized state, the power storage device is less likely to be displaced from the fixed position in the device container. Therefore, uniform pressurization is maintained for the power storage device in the device container, and this can suppress reduction in output efficiency of the solid-state battery as a power storage device.

[Advantageous Effects of the Invention]

According to the present disclosure, there can be provided a packaging material for a power storage device, which is able to improve dimensional stability of the seal portion formed of the packaging material even after a thermal shock.

[Brief Description of the Drawings]

Fig. 1 is a schematic cross-sectional view illustrating a packaging material for a power storage device, according to an embodiment of the present disclosure.
Fig. 2 is a schematic cross-sectional view illustrating a modification of the packaging material for a power storage device shown in Fig. 1.
Fig. 3 is a perspective view illustrating a power storage device according an embodiment of the present disclosure.
Fig. 4 is a diagram with a partial cross section illustrating a state in which the power storage device of Fig. 3 is accommodated in a device container.

[Description of the Embodiments]

With reference to the drawings, some preferred embodiments of the present disclosure will be described in detail. In the drawings, like components are given like reference signs to omit repeated explanation. The dimensional ratios in the drawings should not be limited to the ratios shown in the drawings.

[Packaging material for power storage device]

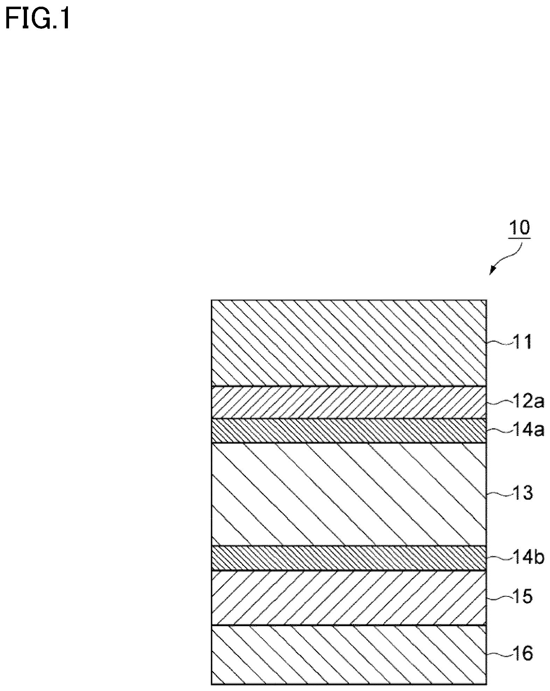

Fig.1 is a schematic cross-sectional view illustrating a packaging material for a power storage device, according to an embodiment of the present disclosure. As shown in Fig. 1, a packaging material for a power storage device (hereinafter also simply referred to as packaging material) 10 according to the present embodiment is used for a power storage device and includes a substrate layer 11, a first adhesive layer 12a, a barrier layer 13, an adhesive resin layer 15 as an adhesive layer, and a sealant layer 16 in this order. The hydrogen sulfide gas permeability at 100°C in the thickness direction of the sealant layer 16 and the adhesive resin layer 15 is $3.7 \times 10^{-15}$ to $1.8 \times 10^{-12}$ [(mol·m)/(m²·s·Pa)].

According to the packaging material 10, dimensional stability of the seal portion formed of the packaging material can be improved even after a thermal shock.

The barrier layer 13 may be provided with a first anticorrosion treatment layer 14a on the substrate layer 11 side, and a second anticorrosion treatment layer 14b on the sealant layer 16 side.

If the packaging material 10 is used as a packaging bag for a power storage device, the substrate layer 11 should be the outermost layer and the sealant layer 16 should be the innermost layer in the packaging material 10. Specifically, the packaging material 10 is used, with the substrate layer 11 facing the outside of the power storage device and the sealant layer 16 facing the inside of the power storage device.

Details of the layers forming the packaging material 10 will be described below.

\<Substrate layer\>

The substrate layer 11 imparts heat resistance to the packaging material 10 during the sealing process of the packaging material 10 when producing a power storage device, and functions to suppress formation of pinholes that may occur during forming or distribution of the packaging material 10. Particularly, in the case of packaging materials used for large power storage devices, scratch resistance, chemical resistance, insulation properties, and the like, can also be imparted.

The substrate layer 11 is preferred to be a layer made of a resin having insulation properties. The resin that can be used include polyester resins, polyamide resins, polyimide resins, polyamide-imide resins, polyether ketone resins, polyphenylene sulfide resins, polyetherimide resins, polysulphone resins, fluororesins, phenol resins, melamine resins, urethane resins, allyl resins, silicone resins, epoxy resins, furan resins, and acetyl cellulose resins.

Of these resins, polyester resins and polyamide resins are preferred to be used for the substrate layer 11 because of having good formability. Examples of the polyester resins include polyethylene terephthalate, polybutylene terephthalate, and polyethylene naphthalate. Examples of the polyamide resins include nylon 6, nylon 6,6, copolymer of nylon 6 and nylon 6,6, nylon 9T, nylon 10, polymetaxylylene adipamide (MXD6), nylon 11, and nylon 12.

The substrate layer 11 may be in the form of a stretched or unstretched film or in the form of a coating film. The substrate layer 11 may be a multilayer or a single layer. If the substrate layer 11 is a multilayer, it may be configured by laminating layers made of different resins. If the substrate layer 11 is in the form of a film, the film may be a coextruded film, or may be a film in which layers are laminated via an adhesive. If the substrate layer 11 is a coating film, the coating film may be obtained by coating a coating film-forming composition multiple times. The substrate layer 11 can have a multilayer configuration obtained by combining a film with a coating film.

If the resins mentioned above are each used in the form of a film, the substrate layer 11 is preferred to be a biaxially stretched film. In this case, the packaging material 10 may have good formability. The stretching method used for obtaining the biaxially stretched film may be, for example, sequential biaxial stretching, tubular biaxial stretching, simultaneous biaxial stretching, or the like. From the perspective of obtaining better deep drawing formability, the biaxially stretched film is preferred to be a film that has been stretched using tubular biaxial stretching.

The substrate layer 11 is preferred to have a thickness of 6 $\mu$m to 100 $\mu$m, more preferably 10 $\mu$m to 75 $\mu$m, and even more preferably 10 $\mu$m to 50 $\mu$m. A substrate layer 11 with a thickness of 6 $\mu$m or greater tends to improve pinhole resistance and insulation properties of the packaging material 10. A substrate layer 11 with a thickness of 100 $\mu$m or less can reduce the total thickness of the packaging material 10.

The substrate layer 11 is preferred to have a melting temperature higher than that of the sealant layer 16. If the sealant layer 16 has a multilayer structure, the melting temperature of the sealant layer 16 refers to the melting temperature of the layer having a highest melting temperature. If the substrate layer 11 has a melting temperature higher than that of the sealant layer 16, the appearance of the packaging material 10 may be prevented from being impaired due to melting of the substrate layer 11 (exterior layer) when heat-sealed.

When the melting temperature of the substrate layer 11 is expressed as $T_{11}$ and that of the sealant layer 16 is expressed as $T_{16}$, the difference therebetween ($T_{11}$-$T_{16}$) is preferred to be 20°C or higher. If the temperature difference is 20°C or higher, deterioration in appearance of the packaging material 10 due to heat sealing can be even more sufficiently minimized.

The melting point of the substrate layer 11 is preferred to be 240°C or higher. However, the melting point of the substrate layer 11 is preferred to be 350°C or lower. The resin film that can be used for the substrate layer 11 and has a melting temperature in the above range may be a polyester film such as a nylon film and PET film, a polyamide film, polyphenylene sulfide film (PPS film), or the like. The substrate layer 11 may be formed using a commercially available film, or may be formed by coating (application and drying of a coating liquid).

The substrate layer 11 may be formed by applying a thermosetting resin.

The substrate layer 11 may contain, for example, various additives (e.g., flame retarders, slip agents, antiblocking agents, antioxidants, photostabilizers, and tackifiers).

\<Second adhesive layer\>

The first adhesive layer 12a adheres the substrate layer 11 to the barrier layer 13. The material constituting the first adhesive layer 12a may be specifically, for example, a polyurethane resin prepared by reacting a bifunctional or higher isocyanate compound (polyfunctional isocyanate compound) as a curing agent, with a base resin such as a polyester polyol, polyether polyol, acrylic polyol, carbonate polyol, or other materials. The various polyols mentioned above can be used singly or in combination of two or more, according to the functions and performance required of the packaging material 10. Other than the above materials, a material obtained by mixing a curing agent into an epoxy resin as a base resin can also be used as the material constituting the first adhesive layer 12a.

The first adhesive layer 12a is formed using an adhesive composition comprising the main resins and curing agents mentioned above. Other various additives or stabilizers may be mixed into the adhesive composition mentioned above to form the first adhesive layer 12a, according to the performance required of the adhesive layer.

The adhesive composition is preferred to comprise at least one polyfunctional isocyanate compound, as a curing agent, selected from the group consisting of alicyclic isocyanate multimers and isocyanate multimers containing aromatic rings in their molecular structure. Examples of the polyfunctional isocyanate compound include a nurate form of isophorone diisocyanate, adduct form of tolylene diisocyanate, adduct form of hexamethylene diisocyanate, biuret form and nurate form of hexamethylene diisocyanate, biuret form and nurate form of tolylene diisocyanate, adduct form, biuret form and nurate form of diphenylmethane diisocyanate, and adduct form, biuret form and nurate form of xylylene diisocyanate.

As the curing agent, an alicyclic isocyanate multimer and an isocyanate multimer containing an aromatic ring in the molecular structure may be used in combination. With this combination, heat resistance tends to be further improved.

From the perspective of further improving heat resistance, the adhesive composition is preferred to contain at least one polyol selected from the group consisting of polyester polyols, acrylic polyols, and polycarbonate diols. Of these, polyester polyols are more preferred from the perspective of further improving heat resistance.

In the adhesive composition, the ratio (NCO/OH) of the number of isocyanate groups contained in the polyfunctional isocyanate compound to the number of hydroxyl groups contained in the polyol is preferred to be 1.5 to 40.0, or more preferred to be 15.0 to 30.0. If the ratio is 1.5 or higher, the curing agents may react with each other, easily producing byproducts such as a urea resin and biuret resin. The byproducts, which contain active hydrogen groups, interact with the polar groups of the adjacent layers, further improving interface adhesion between the first adhesive layer 12a and the substrate layer 11 or the barrier layer 13. Therefore, heat resistance of the packaging material 10 tends to improve. On the other hand, if the ratio is 40.0 or lower, lamination strength of the packaging material 10 can be further improved under room temperature and high temperature environments.

In order to promote curing, the adhesive composition may further contain a tin-, titanium- or zirconium-based urethane catalyst. The adhesive composition may further contain an overt curing agent or latent curing agent. For example, the overt or latent curing agent may be an amine-based compound. The urethane catalysts and the overt or latent curing agents may be used singly or as a mixture of two or more.

The thickness of the first adhesive layer 12a is not specifically limited, but from the perspective of obtaining desired adhesive strength, conformability, processability, and the like, the thickness is preferred to be, for example, 1 μm to 10 μm, and more preferred to be 2 μm to 7 μm.

The mass of the first adhesive layer 12a per unit area is preferred to be 2.0 to 6.0 g/m$^2$, more preferred to be 2.5 to 5.0 g/m$^2$, and even more preferred to be 3.0 to 4.0 g/m$^2$, from the perspective of securing better lamination strength under both of room and high-temperature environments and obtaining better deep drawing formability.

<Barrier Layer>

The barrier layer 13 has water vapor barrier properties to prevent penetration of moisture into the power storage device. Furthermore, the barrier layer 13 may have ductility for undergoing deep drawing.

Examples of the material that can be used for the barrier layer 13 include various metal foils such as of aluminum, stainless steel, and copper, deposited metal films, deposited inorganic oxide films, deposited carbon-containing inorganic oxide films, and films provided with these deposited films.

As the films provided with deposited films, for example, deposited aluminum films or deposited inorganic oxide films can be used. These films can be used singly or in combination of two or more.

The barrier layer 13 is preferred to be formed of a metal foil, and is more preferred to be formed of an aluminum foil or stainless steel foil, in terms of mass (specific gravity), barrier properties such as moisture resistance, processability, and cost.

From the perspective of imparting desired ductility for forming, an annealed soft aluminum foil can be even more preferably used as the aluminum foil. For the purposes of imparting further pinhole resistance and ductility for forming, an aluminum foil containing iron is more preferred to be used.

The content of iron in an aluminum foil is preferred to be 0.1 to 9.0 mass%, and more preferred to be 0.5 to 2.0 mass%, relative to 100 mass% of the aluminum foil. If the iron content is 0.1 mass% or higher, a packaging material 10 having even higher pinhole resistance and ductility can be obtained. If the iron content is 9.0 mass% or less, a packaging material 10 having much higher elasticity can be obtained.

An untreated aluminum foil may be used as the aluminum foil; however, an aluminum foil that has undergone a degreasing treatment is preferred to be used from the perspective of imparting corrosion resistance.

If the aluminum foil is degreased, only one side of the aluminum foil may be degreased, or both sides may be degreased.

The thickness of the barrier layer 13 is not specifically limited, but is preferred to be 9 $\mu$m to 200 $\mu$m, and is more preferred to be 15 $\mu$m to 100 $\mu$m, considering barrier properties, pinhole resistance, and processability.

<First and second anticorrosion treatment layers>

The first and second anticorrosion treatment layers 14a and 14b are provided to the metal foil (metal foil layer) or the like constituting the barrier layer 13 to prevent corrosion. The first anticorrosion treatment layer 14a increases adhesion between the barrier layer 13 and the first adhesive layer 12a. The second anticorrosion treatment layer 14b increases adhesion between the barrier layer 13 and the adhesive resin layer 15.

The first and second anticorrosion treatment layers 14a and 14b may be identically constituted or differently constituted.

The first and second anticorrosion treatment layers 14a and 14b (also simply referred to as anticorrosion treatment layers 14a and 14b hereinafter) may be formed through, for example, a degreasing treatment, hydrothermal modification treatment, anodic oxidation treatment, chemical conversion treatment, or a combination of these treatments.

The degreasing treatment may be acid degreasing, or alkaline degreasing.

The acid degreasing may be a method using an inorganic acid such as sulfuric acid, nitric acid, hydrochloric acid, or hydrofluoric acid singly, a method using a mixture of these acids, and other methods. In the acid degreasing, an acid degreaser in which a fluorine-containing compound such as monosodium ammonium difluoride is dissolved in the inorganic acid mentioned above is preferred to be used. In this case, especially in the case where an aluminum foil is used as the barrier layer 13, a degreasing effect is provided on aluminum. Acid degreasers can form passive aluminum fluorides, and therefore are effective in terms of corrosion resistance.

The alkaline degreasing may be a method using sodium hydroxide or the like.

The hydrothermal modification treatment may be, for example, a boehmite treatment in which an aluminum foil is immersed in boiling water to which triethanolamine has been added.

The anodic oxidation treatment may be, for example, an alumite treatment.

The chemical conversion treatment may be of an immersion type or a coating type.

The immersion type chemical conversion treatment may be, for example, chromate treatment, zirconium treatment, titanium treatment, vanadium treatment, molybdenum treatment, calcium phosphate treatment, strontium hydroxide treatment, cerium treatment, ruthenium treatment, or various chemical conversion treatments including mixed phases thereof.

The coating type chemical conversion treatment may be a method of applying a coating agent having an anticorrosion function onto the barrier layer 13.

If at least part of the anticorrosion treatment layer is formed using any of hydrothermal modification treatment, anodic oxidation treatment, and chemical conversion treatment among these anticorrosion treatments, the degreasing treatment mentioned above is preferred to be performed in advance. If a degreased metal foil, such as an annealed metal foil, is used as the barrier layer 13, degreasing treatment is not required to be newly performed when forming the anticorrosion treatment layers 14a and 14b.

The coating agent used for the coating type chemical conversion treatment is preferred to contain trivalent chromium. The coating agent may contain at least one polymer selected from the group consisting of cationic polymers and anionic polymers, which will be described later.

Of the treatments mentioned above, the hydrothermal modification treatment and the anodic oxidation treatment, in particular, dissolve the surface of the aluminum foil with a treating agent and form an aluminum compound (such as boehmite or alumite) having good corrosion resistance. Therefore, these treatments, which form a co-continuous structure from the barrier layer 13 of an aluminum foil to the anticorrosion treatment layers 14a and 14b, are included within the definition of chemical conversion treatment.

On the other hand, the anticorrosion treatment layers 14a and 14b can also be formed using only a pure coating method, which is not included within the definition of chemical conversion treatment, as will be described later. For example, this method may be a method using a rare-earth oxide sol, such as cerium oxide, with a mean particle size of 100 nm or less, which is a material exhibiting an anticorrosion effect (inhibitor effect) for aluminum, and is suitable from environmental aspects. Use of this method can impart an anticorrosion effect to the metal foil such as an aluminum foil even when an ordinary coating method is used.

Examples of the rare-earth oxide sol include sols using various solvents such as aqueous solvents, alcohol solvents, hydrocarbon solvents, ketone solvents, ester solvents, and ether solvents. Of these, aqueous solvent sols (sols using aqueous solvents) are preferred.

To stabilize dispersion, normally, the rare-earth oxide sol may contain, as a dispersion stabilizer, an inorganic acid such as nitric acid, hydrochloric acid, phosphoric acid, or a salt thereof, or an organic acid such as acetic acid, malic acid, ascorbic acid, or lactic acid. Of these dispersion stabilizers, phosphoric acid, in particular, is expected to have the following effects (1) to (4) in the packaging material 10.

(1) Stabilization of sol dispersion
(2) Improvement in adhesion to the barrier layer 13 using aluminum chelating ability of the phosphoric acid
(3) Impartment of corrosion resistance by capturing aluminum ions (passivation)
(4) Improvement in cohesive force of the anticorrosion treatment layers (oxide layers) 14a and 14b by the phosphoric acid tending to be dehydrated and condensed even at low temperatures

Since the anticorrosion treatment layers 14a and 14b made of the rare-earth oxide sol are aggregates of inorganic particles, there is a risk of reducing cohesive force of the layers even after being dry-cured. Therefore, the anticorrosion treatment layers 14a and 14b in this case are preferred to be compounded with an anionic polymer or a cationic polymer to supplement the cohesive force.

The anticorrosion treatment layers 14a and 14b are not limited to the layers mentioned above. For example, the anticorrosion treatment layers 14a and 14b may be formed using a treatment agent which is obtained by mixing phosphoric acid and a chromium compound into a resin binder (such as aminophenol), as in the coating-type chromate based on the known art. If this treatment agent is used, the layers will have a corrosion prevention function balanced with adhesion. Although it is necessary to consider stability of the coating liquid, a coating agent may be prepared in advance by integrating a rare-earth oxide sol with a polycationic polymer or a polyanionic polymer, for use as layers having a corrosion prevention function balanced with adhesion.

Regardless of whether the structure is a multilayer structure or a single layer structure, mass per unit area of the anticorrosion treatment layers 14a and 14b is preferred to be 0.005 to 0.200 $g/m^2$, and more preferred to be 0.010 to 0.100 $g/m^2$. If the mass per unit area is 0.005 $g/m^2$ or greater, anticorrosion function can be easily imparted to the barrier layer 13. Even if the mass per unit area exceeds 0.200 $g/m^2$, the anticorrosion function substantially remains unchanged. If a rare-earth oxide sol is used and if the coating is excessively thick, heat-curing during drying may become insufficient, and the cohesive force may be reduced. It should be noted that the thickness of each of the anticorrosion treatment layers 14a and 14b can be converted from its specific gravity.

From the perspective of easily maintaining adhesion between the sealant layer 16 and the barrier layer 13, the anticorrosion treatment layers 14a and 14b may contain, for example, cerium oxide, 1 part by mass to 100 parts by mass of phosphoric acid or phosphate relative to 100 parts by mass of the cerium oxide, and a cationic polymer, or they may be formed by allowing the barrier layer 13 to undergo chemical conversion treatment, or they may be formed by allowing the barrier layer 13 to undergo chemical conversion treatment, with a cationic polymer contained.

(Sealant layer and adhesive resin layer)

The sealant layer 16, which imparts sealing properties to the packaging material 10 by heat sealing, is disposed on the inside and heat sealed (thermally adhered) when the power storage device is assembled.

The adhesive resin layer 15 adheres between the sealant layer 16 and the barrier layer 13, and contains an adhesive resin.

The hydrogen sulfide gas permeability at 100°C in the sealant layer 16 and the adhesive resin layer 15 only has to be $3.7 \times 10^{-15}$ to $1.8 \times 10^{-12}$ [(mol·m)/(m²·s·Pa)].

The hydrogen sulfide gas permeability at 100°C in the sealant layer 16 is preferred to be $1.8 \times 10^{-14}$ [(mol·m)/(m²·s·Pa)] or greater, more preferred to be $3.3 \times 10^{-14}$ [(mol·m)/(m²·s·Pa)] or greater, even more preferred to be $8 \times 10^{-14}$ [(mol·m)/(m²·s·Pa)] or greater, still more preferred to be $1.0 \times 10^{-13}$ [(mol·m)/(m²·s·Pa)] or greater, or still more preferred to be $1.1 \times 10^{-13}$ [(mol·m)/(m²·s·Pa)] or greater.

The hydrogen sulfide gas permeability at 100°C in the sealant layer 16 is preferred to be $3.7 \times 10^{-13}$ [(mol·m)/(m²·s·Pa)] or less, more preferred to be $2.2 \times 10^{-13}$ [(mol·m)/(m²·s·Pa)] or less, even more preferred to be $2.0 \times 10^{-13}$ [(mol·m)/(m²·s·Pa)] or less, still more preferred to be $1.5 \times 10^{-13}$ [(mol·m)/(m²·s·Pa)] or less, or still more preferred to be $1.3 \times 10^{-13}$ [(mol·m)/(m²·s·Pa)] or less.

From the perspective of improving dimensional stability of the seal portion formed of the packaging material 10 even after a thermal shock, the hydrogen sulfide gas permeability at 100°C in the sealant layer 16 is preferred to be $1.8 \times 10^{-14}$ to $3.7 \times 10^{-13}$ [(mol·m)/(m²·s·Pa)], more preferred to be $3.3 \times 10^{-14}$ to $2.2 \times 10^{-13}$ [(mol·m)/(m²·s·Pa)], even more preferred to be $8 \times 10^{-14}$ to $2.0 \times 10^{-13}$ [(mol·m)/(m²·s·Pa)], and especially preferred to be $1.0 \times 10^{-14}$ to $1.5 \times 10^{-13}$ [(mol·m)/(m²·s·Pa)].

The sealant layer 16 may contain a base resin (A) comprising a polyolefin resin. The sealant layer 16 may further contain a compatibilizer (B), or may not further contain a compatibilizer (B).

The polyolefin resin may comprise at least either of a polypropylene resin or a polyethylene resin; however, it is preferred to comprise both of a polypropylene resin and a polyethylene resin. In this case, rigidity may be imparted by the polypropylene resin to the seal portion formed of the packaging material 10, while elasticity (stress relaxation properties) is imparted thereto by the polyethylene resin, and therefore during contraction of the seal portion after a thermal shock, the contraction can be suppressed.

The polypropylene resin comprises a resin obtained from a polymerized monomer containing propylene, and serves to impart rigidity. The polypropylene resin may be a homopolypropylene, block polypropylene, random polypropylene, or the like. These resins may be used singly or in combination of two or more. The polypropylene resin is preferred to comprise at least one of a homopolypropylene and a block polypropylene that can impart rigidity in particular.

The polyethylene resin comprises a resin obtained from a polymerized monomer containing ethylene, and serves to impart elasticity (stress relaxation properties). The polyethylene resin may be low-density polyethylene (LDPE), linear low-density polyethylene (LLDPE), medium-density polyethylene (MDPE), high-density polyethylene (HDPE), a polyethylene elastomer, or the like. These resins may be used singly or in combination of two or more. The polyethylene resin is preferred to comprise a polyethylene elastomer because it can impart elasticity in particular.

As the polyethylene elastomer, an elastomer containing an $\alpha$-olefin as a comonomer can be used. Specifically, such a polyethylene elastomer may be a compound obtained by copolymerizing an $\alpha$-olefin constituted of at least one material selected from 1-butene, 1-pentene, 1-hexene, 1-octene, and 4-methyl-1-pentene, with ethylene.

It is preferred that a sea-island structure having a sea area and islands in the sea area is observed when a cross section of the sealant layer 16 is observed using a scanning electron microscope (hereinafter may also referred to as SEM). In this case, during contraction of the seal portion formed of the packaging material 10 after a thermal shock, the contraction stress is efficiently relaxed at the interface between the sea area and each of the islands of the sea-island structure, and therefore dimensional stability of the seal portion can be easily improved.

When the area of the entire field of view when observed with SEM is taken to be the standard (100%), the proportion of the area of the islands, although not especially limited, is preferred to be 2 to 98%, and more preferred to be 10 to 90%, from the perspective of further improving dimensional stability of the seal portion after a thermal shock.

The content of the polypropylene resin in the sealant layer 16 is not especially limited, but is preferred to be, for example, 30 to 100 mass%; however, in terms of balance between rigidity and elasticity, is more preferred to be 50 to 95 mass%, and even more preferred to be 70 to 90 mass%.

The content of the polyethylene resin in the sealant layer 16 is not especially limited, but is preferred to be, for example, 2 to 70 mass%; however, in terms of balance between rigidity and elasticity, is more preferred to be 5 to 50 mass%, and even more preferred to be 10 to 30 mass%.

The compatibilizer (B) is not especially limited as long as it has portions compatible with a polypropylene resin (hereinafter also referred to as PP-compatible site) and portions compatible with a polyethylene resin (hereinafter also referred to as PE-compatible site).

Specifically, the compatibilizer (B) may be a graft copolymer in which the PP-compatible portions are the main chains and the PE-compatible portions are the side chains, a graft copolymer in which the PE-compatible portions are the main chains and the PP-compatible portions are the side chains, or a block copolymer in which the PP-compatible portions and the PE-compatible portions exist as blocks.

From the perspective of improving dispersibility of the compatibilizer (B), a block copolymer in which the PP-compatible portions and the PE-compatible portions exist as blocks is especially preferred. Examples of the block copolymer include a block copolymer of polypropylene and polyethylene (PP/PE block copolymer), and block copolymer of polyethylene and polyethylenebutylene (PE/PE-butylene block copolymer).

The content of the compatibilizer (B) in the sealant layer 16 is not especially limited, but is preferred to be, for example, 1 to 50 mass%, more preferred to be 2 to 30 mass%, even more preferred to be 5 to 15 mass%, and most preferred to be 6 to 15 mass%. If the content of the compatibilizer (B) in the sealant layer 16 is 2 to 30 mass%, rigidity can be effectively balanced with elasticity, and during contraction of the seal portion after a thermal shock, the contraction stress can be more effectively relaxed, and thus the seal portion is more effectively suppressed from undergoing contraction.

The mass ratio of the compatibilizer (B) to the polyethylene resin (PE) is not especially limited, but is preferred to be, for example, PE:B = 5:1 to 1:5; however, in terms of dispersion efficiency, is more preferred to be 2:1 to 1:4, and even more preferred to be 1:1.1 to 1:3.

In addition to the base resin (A) and the compatibilizer (B), the sealant layer 16 may contain as necessary, for example, a slip agent, antiblocking agent, antioxidant, photostabilizer, crystal nucleating agent, flame retardant, etc. as other additive components.

The content of these additive components is preferred to be 5 mass% or less when the total mass of the sealant layer 16 is regarded to be 100 mass%.

The adhesive resin layer 15 is not especially limited as long as it contains a resin adhering between the sealant layer 16 and the barrier layer 13, and such a resin may be an acid-modified polyolefin resin, or the like. In this case, adhesion between the barrier layer 13 and the sealant layer 16 may be easily improved.

The acid-modified polyolefin resin may be a polyolefin resin which has been modified by at least one acid selected from the group consisting of maleic anhydride, carboxylic acid, sulfonic acid, and their derivatives. The acid-modified polyolefin resin may be, for example, a graft copolymer, block copolymer, or random copolymer. The acid-modified polyolefin resin is preferred to be a polyolefin resin graft-modified by a maleic anhydride, in terms of adhesion with the barrier layer 13.

As necessary, the adhesive resin layer 15 may contain, for example, various elastomers, and various additives such as a flame retardant, slip agent, antiblocking agent, antioxidant, photo stabilizer, crystal nucleating agent, and tackifier, which may be compatible or incompatible.

The ratio of the thickness of the sealant layer 16 to the thickness of the adhesive resin layer 15 (thickness of the sealant layer 16 / thickness of the adhesive resin layer 15) is preferred to be 1 or greater, more preferred to be 1.1 or greater, and even more preferred to be 1.5 or greater, from the perspective of improving rigidity of the seal portion.

The ratio of the thickness of the sealant layer 16 to the thickness of the adhesive resin layer 15 (thickness of the sealant layer 16 / thickness of the adhesive resin layer 15) is preferred to be 10 or less, and more preferred to be 3 or less, from the perspective of improving rigidity of the seal portion.

The total thickness of the sealant layer 16 and the adhesive resin layer 15 is preferred to be 15 $\mu$m to 300 $\mu$m; however, in terms of sealing properties or water vapor barrier properties, the total thickness is more preferred to be 25 $\mu$m to 150 $\mu$m, and even more preferred to be 40 $\mu$m to 100 $\mu$m.

When a packaging material includes an adhesive resin layer 15 and a sealant layer 16 as does the packaging material 10, resin compositions for forming the respective layers may be individually formulated and laminated using a T-die method or inflation method, or one layer may be prepared and then another layer may be laminated thereon by extrusion, or the individual layers may be prepared using a T-die method or inflation method and then these layers may be bonded together using an adhesive. In terms of interface adhesion, the adhesive used may be an adhesive containing acid-modified polypropylene and a curing agent (e.g., isocyanate, etc.).

Preferred modes of the present embodiment have been described in detail so far, but the present disclosure should not be limited to these specific modes.

For example, Fig. 1 shows the packaging material in which the anticorrosion treatment layers 14a and 14b are provided to both respective surfaces of the barrier layer 13; however, the packaging material may include only either of the anticorrosion treatment layers 14a and 14b, or may include neither of the anticorrosion treatment layers 14a and 14b.

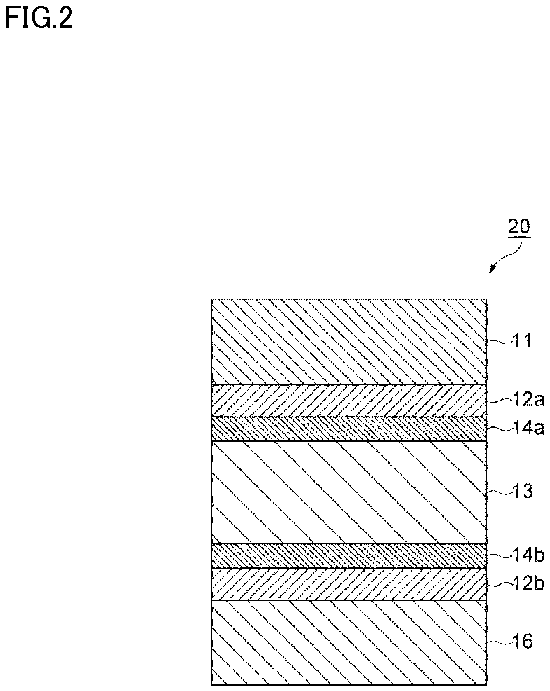

Although Fig. 1 shows the case where the barrier layer 13 is laminated with the sealant layer 16 using the adhesive resin layer 15, the barrier layer 13 may be laminated with the sealant layer 16 using a second adhesive layer 12b as in a packaging material 20 shown in Fig. 2.

<Second adhesive layer>

The second adhesive layer 12b will be described below.

The second adhesive layer 12b adheres the barrier layer 13 to the sealant layer 16. A general purpose adhesive for bonding a barrier layer 13 to a sealant layer 16 may be used for the second adhesive layer 12b.

If a second anticorrosion treatment layer 14b is provided on the barrier layer 13 and if it includes a layer containing at least one polymer selected from the group consisting of the cationic polymers and anionic polymers mentioned above, the second adhesive layer 12b is preferred to contain a compound having reactivity (also referred to as reactive compound hereinafter) with the polymer contained in the second anticorrosion treatment layer 14b.

For example, if the second anticorrosion treatment layer 14b contains a cationic polymer, the second adhesive layer 12b is preferred to contain a compound reactive with the cationic polymer.

If the second anticorrosion treatment layer 14b contains an anionic polymer, the second adhesive layer 12b is preferred to contain a compound reactive with the anionic polymer.

Also, if the second anticorrosion treatment layer 14b contains both a cationic polymer and an anionic polymer, the second adhesive layer 12b is preferred to contain a compound reactive with the cationic polymer and a compound reactive with the anionic polymer. However, the second adhesive layer 12b does not necessarily need to contain the two kinds of compounds, but may contain a compound reactive with both the cationic polymer and the anionic polymer. The expression "reactive with" refers to forming a covalent bond with a cationic polymer or an anionic polymer. The second adhesive layer 12b may further contain an acid-modified polyolefin resin.

The compound reactive with a cationic polymer may be at least one compound selected from the group consisting of polyfunctional isocyanate compounds, glycidyl compounds, compounds having carboxy groups, and compounds having oxazoline groups.

The polyfunctional isocyanate compounds, the glycidyl compounds, the compounds having carboxy groups, or the compounds having oxazoline groups may include the polyfunctional isocyanate compounds, the glycidyl compounds, the compounds having carboxy groups, the compounds having oxazoline groups, and the like exemplified above as crosslinking agents for converting a cationic polymer into a crosslinked structure. Of these, polyfunctional isocyanate compounds are preferred from the perspective of being highly reactive with a cationic polymer and being readily formed into a crosslinked structure.

The compound reactive with anionic polymers may be at least one compound selected from the group consisting of glycidyl compounds and compounds having oxazoline groups.

As the glycidyl compounds or the compounds having oxazoline groups, those which are exemplified above as crosslinking agents for converting a cationic polymer into a crosslinked structure may be used. Of these, glycidyl compounds are preferred from the perspective of being highly reactive with anionic polymers.

If the second adhesive layer 12b contains an acid-modified polyolefin resin, it is preferred that the reactive compound is also reactive with the acidic group in the acid-modified polyolefin resin (i.e., forms a covalent bond with the acidic group).

Thus, adhesion to the second anticorrosion treatment layer 14b may be further enhanced. In addition, the acid-modified polyolefin may be converted to a crosslinked structure to further improve solvent resistance of the packaging material 20.

The content of the reactive compound is preferred to be 1 to 10 equivalents of the acidic group in the acid-modified polyolefin resin.

If the content of the reactive compound is 1 equivalent or greater, the reactive compound sufficiently reacts with the acidic group in the acid-modified polyolefin resin. If the content of the reactive compound exceeds 10 equivalents, sufficient saturation is reached as a crosslinking reaction with the acid-modified polyolefin resin, and therefore unreacted substances may remain, deteriorating various functions. Accordingly, for example, the content of the reactive compound is preferred to be 5 to 20 parts by mass relative to 100 parts by mass of the acid-modified polyolefin resin (solid content ratio).

The acid-modified polyolefin resin is obtained by introducing an acidic group into the polyolefin resin. The acidic group may be a carboxy group, sulfonic acid group, acid anhydride group, or the like, and in particular, a maleic anhydride group or (meth)acrylic acidic group is preferred. As the acid-modified polyolefin resin, for example, a resin similar to the modified polyolefin used for the sealant layer 16 can be used.

Various additives such as a flame retardant, slip agent, antiblocking agent, antioxidant, photo stabilizer, tackifier, and the like may be added to the second adhesive layer 12b.

From the perspective of minimizing reduction in heat-sealing strength in the case where corrosive gas such as of hydrogen sulfide or an electrolyte is involved, and further minimizing deterioration in insulation properties, the second adhesive layer 12b may contain, for example, an acid-modified polyolefin, and at least one curing agent selected from the group consisting of polyfunctional isocyanate compounds, glycidyl compounds, compounds having carboxy groups, compounds having oxazoline groups, and carbodiimide compounds.

Examples of the carbodiimide compounds include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-tolyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide, and N,N'-di-p-tolylcarbodiimide.

The adhesive used for forming the second adhesive layer 12b may be, for example, a polyurethane adhesive obtained by mixing a polyester polyol constituted of hydrogenated dimer fatty acid and diol, with a polyisocyanate. The adhesive may be a polyurethane resin obtained by having a bifunctional or higher isocyanate compound act on a base resin such as a polyester polyol, polyether polyol, acrylic polyol, or carbonate polyol, an epoxy resin obtained by having an amine compound or the like act on a base resin having an epoxy group, or other resins. These resins are preferred in terms of heat resistance.

The thickness of the second adhesive layer 12b is not specifically limited, but from the perspective of obtaining desired adhesive strength, processability, and the like, the thickness is preferred to be 1 $\mu$m to 10 $\mu$m, and more preferred to be 2 $\mu$m to 7 $\mu$m.

[Method of producing packaging material]

Next, an example of a method of producing the packaging material 10 shown in Fig. 1 will be described. The method of producing the packaging material 10 should not be limited to the method described below.

The method of producing the packaging material 10 of the present embodiment includes a step of providing the anticorrosion treatment layers 14a and 14b to the barrier layer 13, a step of bonding the substrate layer 11 and the barrier layer 13 together using the first adhesive layer 12a, a step of preparing a laminate by further laminating the adhesive resin layer 15 and the sealant layer 16 on the surface of the barrier layer 13 on the anticorrosion treatment layer 14b side, and, as necessary, a step of aging the obtained laminate.

(Step of laminating anticorrosion treatment layers on barrier layer)

In the present step, the anticorrosion treatment layers 14a and 14b are formed on the barrier layer 13. As described above, the method may include applying a degreasing treatment, hydrothermal modification treatment, anodic oxidation treatment, or chemical conversion treatment to the barrier layer 13, or applying a coating agent having an anticorrosion function onto the barrier layer 13.

If the anticorrosion treatment layers 14a and 14b are each a multilayer, for example, a coating liquid (coating agent) for constituting the underlayer-side (barrier layer 13-side) anticorrosion treatment layer may be applied to the barrier layer 13, followed by baking to form a first layer, and then, a coating liquid (coating agent) for constituting the overlayer-side anticorrosion treatment layer may be applied to the first layer, followed by baking to form a second layer.

The degreasing treatment may be performed using a spraying method or an immersion method. The hydrothermal modification treatment or the anodic oxidation treatment may be performed using an immersion method. The chemical conversion treatment may be performed by appropriately selecting an immersion method, a spraying method, a coating method, or the like, depending on the type of the chemical conversion treatment.

Various methods such as gravure coating, reverse coating, roll coating, and bar coating may be used as the method of applying the coating agent having a corrosion prevention function.

As described above, these treatments may be applied to both sides or one side of the barrier layer 13 (e.g., metal foil). If only one side is treated, the treatment surface is preferred to be at the side on which the sealant layer 16 is to be laminated. As necessary, the above treatments may also be applied to the surface of the substrate layer 11.

The amount of the coating agent for forming each of the first and second layers is preferred to be 0.005 to 0.200 $g/m^2$, and more preferred to be 0.010 to 0.100 $g/m^2$.

If necessary, dry curing can be performed at a temperature within a base material temperature range of 60 to 300°C, depending on the drying conditions of the anticorrosion treatment layers 14a and 14b used. The base material temperature refers to the temperature of the barrier layer 13 (e.g., metal foil).

(Step of bonding substrate layer and barrier layer together)

In the present step, the barrier layer 13 provided with the anticorrosion treatment layers 14a and 14b is bonded to the substrate layer 11 via the first adhesive layer 12a. The substrate layer 11 is bonded to the surface of the barrier layer 13 on the anticorrosion treatment layer 14a side.

In the bonding method, a technique such as dry lamination, non-solvent lamination, or wet lamination may be used to bond both layers together, using the materials mentioned above constituting the first adhesive layer 12a.

The first adhesive layer 12a is provided so that the dry coating amount thereof will be preferably in the range of 1 to 10 $g/m^2$, and more preferably in the range of 2 to 7 $g/m^2$.

(Step of laminating adhesive resin layer and sealant layer)

In the step of laminating an adhesive resin layer and a sealant layer, the adhesive resin layer 15 and the sealant layer 16 are formed on the surface of the barrier layer 13 on the anticorrosion treatment layer 14b side.

The method may include sandwich-laminating the adhesive resin layer 15 together with the sealant layer 16 using an extrusion laminator.

Furthermore, the adhesive resin layer 15 and the sealant layer 16 may be extruded and laminated using a tandem lamination method or a co-extrusion method.

When forming the adhesive resin layer 15 and the sealant layer 16, components are formulated to satisfy, for example, the configurations of the adhesive resin layer 15 and the sealant layer 16 described above.

The adhesive resin layer 15 is formed using an adhesive resin layer-forming resin composition containing the components of the adhesive resin layer 15 mentioned above.

The sealant layer 16 is formed using a sealant layer-forming resin composition containing the components of the sealant layer 16 mentioned above.

The adhesive resin layer 15 and the sealant layer 16 are formed such that the hydrogen sulfide gas permeability at 100°C in the thickness direction of these layers will be $3.7 \times 10^{-15}$ to $1.8 \times 10^{-12}$ [(mol·m)/(m²·s·Pa)]. For this purpose, for example, the base resin (A) and the resin used for the compatibilizer (B) contained in the sealant layer 16, and the resin used for the adhesive resin layer 15 may be appropriately selected considering crystallinity or melting point, and formulated while appropriately determining the contents or the like of the base resin (A) and the resin in the compatibilizer (B), so that rigidity can be balanced with elasticity.

Through the lamination step for the adhesive resin layer 15 and the sealant layer 16, a laminate as shown in Fig. 1 can be obtained in which layers are laminated in the order of substrate layer 11 / first adhesive layer 12a / first anticorrosion treatment layer 14a / barrier layer 13 / second anticorrosion treatment layer 14b / adhesive resin layer 15 / sealant layer 16.

It should be noted that the adhesive resin layer 15 may be laminated by directly extruding materials that have been dry-blended with the above material formulation for the composition, using an extrusion laminator. Alternatively, granules for the adhesive resin layer 15 may be produced in advance by melt-blending materials using a melt kneader, such as a single screw extruder, twin screw extruder, or Brabender mixer, and then the granules may be extruded using an extrusion laminator for lamination.

The sealant layer 16 may be laminated by directly extruding dry-blended materials, i.e., the components of the sealant layer-forming resin composition, using an extrusion laminator. Alternatively, granules for the adhesive resin layer 15 and the sealant layer 16 may be produced in advance by melt-blending respective materials using a melt kneader, such as a single screw extruder, twin screw extruder or Brabender mixer, and then the granules may be coextruded using a tandem lamination method or a coextrusion method using an extrusion laminator for lamination of the adhesive resin layer 15 and the sealant layer 16.

Alternatively, a sealant layer 16 may be prepared as a cast film in advance using a sealant layer-forming resin composition, and then the sealant layer 16 may be sandwich-laminated together with an adhesive resin to obtain an adhesive resin layer 15 with the sealant layer 16.

From the perspective of productivity, the formation rate (processing rate) of the adhesive resin layer 15 and the sealant layer 16 can be, for example, 80 m/min or faster.

(Step of aging)

In the step of aging, the laminate is aged (cured). By aging the laminate, adhesion can be promoted between the substrate layer 11 / first adhesive layer 12a / first anticorrosion treatment layer 14a / barrier layer 13, and between the barrier layer 13 / second anticorrosion treatment layer 14b / second adhesive layer 12b / sealant layer 16.

The aging temperature may be preferably 80°C or higher, more preferably 100°C or higher, or even more preferably 120°C or higher, and may be preferably 140°C or lower, more preferably 150°C or lower, or even more preferably 160 °C or lower.

The aging period of time may be preferably 1 hour or longer, more preferably 2 hours or longer, and even more preferably 3 hours or longer, and may be preferably 24 hours or shorter, more preferably 48 hours or shorter, or even more preferably 72 hours or shorter.

Through the processing described above, the packaging material 10 of the present embodiment as shown in Fig. 1 can be prepared.

Next, an example of a method of producing the packaging material 20 shown in Fig. 2 will be described. The method of producing the packaging material 20 should not be limited to the method described below.

The method of producing the packaging material 20 of the present embodiment includes a step of providing the anticorrosion treatment layers 14a and 14b to the barrier layer 13, a step of bonding the substrate layer 11 and the barrier layer 13 together using the first adhesive layer 12a, a step of preparing a laminate by bonding the sealant layer 16 to the surface of the barrier layer 13 on the anticorrosion treatment layer 14b side via the second adhesive layer 12b, and, as necessary, a step of aging the obtained laminate.

Steps up to the step of bonding the substrate layer 11 to the barrier layer 13 using the first adhesive layer 12a can be performed as in the method of producing the packaging material 10 described above. The step of aging the obtained laminate can be performed as in the method of producing the packaging material 10 described above.

(Step of laminating second adhesive layer and sealant layer)

In the step of laminating the second adhesive layer 12b and the sealant layer 16, a laminate is obtained by bonding the sealant layer 16 to the surface of the barrier layer 13 on the second anticorrosion treatment layer 14b side via the second adhesive layer 12b.

The bonding method may be wet processing, dry lamination, or the like.

If wet processing is used, a solution or a dispersion of the adhesive constituting the second adhesive layer 12b may be applied onto anticorrosion treatment layer 14b, and the solvent may be evaporated and dried at a predetermined temperature to form a film, or following vaporization and drying, the film may be baked as necessary.

Then, a sealant layer 16 may be laminated.

The coating method may be any of various coating methods. A preferred dry coating amount of the second adhesive layer 12b is similar to that of the first adhesive layer 12a.

In this case, the sealant layer 16 can be prepared, for example, using a sealant layer-forming resin composition containing the base resin (A) and the compatibilizer (B) mentioned above, and using a melt extruder. From the perspective of productivity, the melt extruder may be used at a processing rate of 80 m/min or faster.

The second adhesive layer 12b and the sealant layer 16 are formed such that hydrogen sulfide gas permeability at 100°C in the thickness direction of these layers will be $3.7 \times 10^{-15}$ to $1.8 \times 10^{-12}$ [(mol·m)/(m²·s·Pa)]. For this purpose, for example, the base resin (A) and the resin used for the compatibilizer (B) contained in the sealant layer 16, and the resin used for the second adhesive layer 12b may be appropriately selected considering crystallinity or melting point, and formulated while appropriately determining the contents or the like of the base resin (A) and the resin in the compatibilizer (B), so that rigidity can be balanced with elasticity.

In this way, the packaging material 20 is prepared.

The packaging material of the present disclosure can also be suitably used as a packaging material for power storage devices including, for example, secondary batteries such as lithium ion batteries, nickel-metal hydride batteries, and lead storage batteries, and electrochemical capacitors such as electric double layer capacitors.

The packaging material described above can improve dimensional stability of the seal portion even after a thermal shock. Therefore, even when a power storage device receives a thermal shock after being accommodated in a device container, the gap between the seal portion of the packaging bag of the power storage device and the inner surface of the device container is less likely to increase. Accordingly, even when vibration or the like is applied, the power storage device is less likely to be displaced from the fixed position in the device container. Consequently, when wiring or the like is connected to the power storage device, disconnection of the wiring or the like is suppressed.

The packaging material of the present disclosure can be especially suitably used for packaging materials which are used for power storage devices constituted of solid-state batteries. Such a power storage device, which is accommodated in a device container with the power storage element pressurized via the packaging bag, is less likely to be displaced from the fixed position in the device container. Therefore, uniform pressurization is maintained for the power storage device in the device container, and this can suppress reduction in output efficiency of the solid-state battery as a power storage device.

[Power storage device]

Next, some embodiments of the power storage device of the present disclosure will be described.

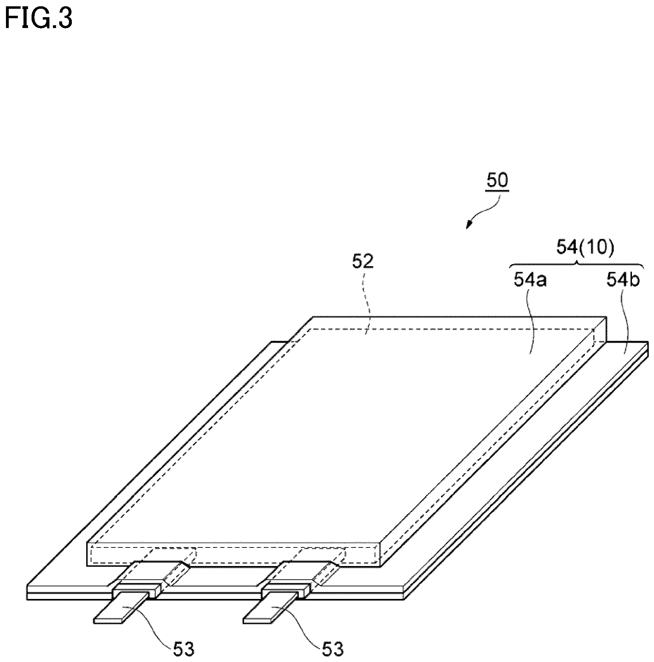

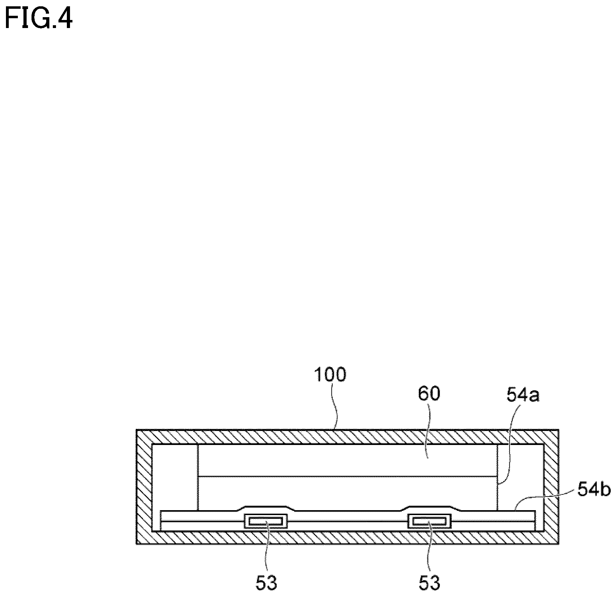

Fig. 3 is a perspective view illustrating a power storage device according to an embodiment of the present disclosure, and Fig. 4 is a diagram with a partial cross section illustrating a state in which the power storage device shown in Fig. 3 is accommodated in a device container. As shown in Fig. 3, a solid-state battery 50 as a power storage device is constituted of a power storage element 52, two metal terminals (current output terminals) 53 extending from the power storage element 52 to externally output current, and a packaging bag 54 hermetically accommodating the power storage element 52.

The packaging bag 54, which is used as a container for accommodating the power storage element 52, is formed so as to have a bag body 54a and a seal portion 54b provided to the bag body 54a, using the packaging material 10 of the present embodiment described above. In the packaging material 10, the substrate layer 11 is the outermost layer and the sealant layer 16 is the innermost layer. The packaging bag 54 is formed by folding a single packaging material 10 into two so that the substrate layer 11 is located outside the solid-state battery 50 and the sealant layer 16 is located inside with the solid-state battery 50, and heat-sealing the periphery of the folded packaging material, or by overlapping two packaging materials 10 and heat-sealing the periphery of the overlapped packaging materials, so that the power storage element 52 can be accommodated inside.

The metal terminals 53 are sandwiched by the packaging bag 54 with the sealant layer 16 located inside. The metal terminals 53 may be sandwiched between surfaces of the packaging bag 54 via tab sealants. The metal terminals 53, which are part of a current collector externally drawn out of the packaging material(s) 10, are formed of metal foils such as copper foils or aluminum foils.

The power storage element 52 includes a pair of electrodes and a solid electrolyte sandwiched between the pair of electrodes. Of the pair of electrodes, one is a positive electrode and the other is a negative electrode. The solid electrolyte may be, for example, a sulfide solid electrolyte, an oxide solid electrolyte, or the like.

According to the solid-state battery 50, even when the seal portion 54b of the packaging bag 54 has received a thermal shock, contraction of the seal portion 54b is suppressed and dimensional stability of the seal portion 54b is improved. Therefore, even when the solid-state battery 50 receives a thermal shock after being accommodated in the device container 100, as shown in Fig. 4, the gap between the seal portion 54b of the packaging bag 54 of the solid-state battery 50 and the inner surface of the device container 100 is less likely to increase. Accordingly, even when vibration or the like is applied, the solid-state battery 50 is less likely to be displaced from the fixed position in the device container 100. Consequently, when wiring or the like is connected to the solid-state battery 50, disconnection of the wiring or the like is suppressed.

Also, as shown in Fig. 4, the solid-state battery 50, which is accommodated in the device container 100 with the power storage element 52 pressurized by a pressurization member 60 via the packaging bag 54, becomes less likely to be displaced from the fixed position in the device container 100. Therefore, uniform pressurization is maintained for the solid-state battery 50 in the device container, and this can suppress reduction in output efficiency of the solid-state battery 50 as a power storage device.

In the solid-state battery 50, the packaging material 20 may be used in place of the packaging material 10 for the packaging bag 54.

Furthermore, in place of the solid-state battery 50, such devices can be used as the power storage device, including secondary batteries such as lithium ion batteries, nickel-metal hydride batteries and lead storage batteries, electrochemical capacitors such as electric double layer capacitors, and semi-solid-state batteries.

The present disclosure can be summarized as follows.

[1] A packaging material for a power storage device including at least a substrate layer, a barrier layer, an adhesive layer, and a sealant layer in this order, wherein the hydrogen sulfide gas permeability at 100°C in the thickness direction of the sealant layer and the adhesive layer is $3.7 \times 10^{-15}$ to $1.8 \times 10^{-12}$ [(mol·m)/(m²·s·Pa)].

[2] The packaging material for a power storage device according to [1], wherein, when a cross section of the sealant layer is observed using a scanning electron microscope, a sea-island structure having a sea area and islands in the sea area is observed.

[3] The packaging material for a power storage device according to [1] or [2], wherein the sealant layer contains a base resin (A) comprising a polyolefin resin.

[4] The packaging material for a power storage device according to [3], wherein the polyolefin resin comprises a polypropylene resin and a polyethylene resin.

[5] The packaging material for a power storage device according to [4], wherein the sealant layer further contains a compatibilizer (B) having portions compatible with the polypropylene resin and portions compatible with the polyethylene resin.

[6] The packaging material for a power storage device according to [5], wherein the compatibilizer (B) comprises at least either of a block copolymer (B1) of polypropylene and polyethylene and a block copolymer (B2) of polyethylene and polyethylenebutylene.

[7] The packaging material for a power storage device according to [5] or [6], wherein the content of the compatibilizer (B) in the sealant layer is 2 to 30 mass%.

[8] The packaging material for a power storage device according to any of [1] to [7], wherein the power storage device is a solid-state battery.

[9] A power storage device including a power storage element and a packaging bag accommodating the power storage element, wherein the packaging bag is formed using the packaging material according to any of [1] to [7] so as to have a bag body and a seal portion provided to the bag body.

[10] The power storage device according to [9], wherein the power storage device is a solid-state battery.

Examples

The present disclosure will be specifically described below based on examples; however, the present disclosure should not be limited to the following examples.

[Materials used]

The materials shown below were used as a substrate layer, an adhesive for forming a first adhesive layer, an adhesive for forming a second adhesive layer, a first anticorrosion treatment layer-forming material, a second anticorrosion treatment layer-forming material, a barrier layer, an adhesive resin layer, and a sealant layer.

<Substrate layer>

PET: Polyethylene terephthalate film with one side corona-treated (thickness: 25 μm)

<Adhesive for forming first adhesive layer (mass per unit area: 4.0 g/m²)>

An adhesive (first adhesive) obtained by mixing a polyester polyol (product name: TESLAC2505-63, hydroxyl number: 7 to 11 mg KOH/g, manufactured by Showa Denko K.K.) with an isophorone diisocyanate nurate (product name: Takenate 600, manufactured by Mitsui Chemicals, Inc.) so that the NCO/OH ratio would be 20.0, and diluting the mixture with ethyl acetate so that the solid content would be 26 mass%

<Adhesive for forming second adhesive layer (mass per unit area: 3.0 g/m²)>

An adhesive (second adhesive) obtained by mixing 10 parts by mass of a polyisocyanate compound having an isocyanurate structure, relative to 100 parts by mass of an acid-modified polyolefin resin dissolved in toluene (solid content ratio)

<First anticorrosion treatment layer-forming material and second anticorrosion treatment layer-forming material>

The first anticorrosion treatment layer-forming material (substrate layer side) and the second anticorrosion treatment layer-forming material (sealant layer side) are as shown in the following (CL-1) and (CL-2).

(CL-1): A sodium polyphosphate-stabilized cerium oxide sol obtained by adjusting the solid content concentration to 10 mass% using distilled water as a solvent
The sodium polyphosphate-stabilized cerium oxide sol was obtained by mixing 10 parts by mass of Na salt of phosphoric acid, relative to 100 parts by mass of cerium oxide.
(CL-2): A composition obtained by adjusting the solid content concentration to 5 mass% using distilled water as a solvent

In the above composition, the ratio of polyallylamine (manufactured by Nitto Boseki Co., Ltd.) : polyglycerol polyglycidyl ether (manufactured by Nagase ChemteX Corporation) was set to 90:10 (mass ratio).

<Barrier layer (thickness: 40 $\mu$m)>

AL: An annealed and degreased soft aluminum foil (8079 Material manufactured by Toyo Aluminum K.K.)

<Adhesive resin layer (adhesive layer)>

Maleic anhydride-modified homopolypropylene

(Hydrogen sulfide gas permeability at 100°C: $1.8 \times 10^{-14}$ [(mol·m)/(m$^2$·s·Pa)], melting temperature: 162°C)

<Sealant layer>

The base resin (A) and the compatibilizer (B) used for the sealant layer are as shown in Table 1 below. In the following Table 1, PP represents polypropylene, and PE represents polyethylene.

[Table 1]

|  | No. | Material |
|---|---|---|
| Base resin (A) | A1 | Homo PP |
|  | A2 | Block PP |
|  | A3 | Random PP |
|  | A4 | Polymethylpentene |
|  | A5 | PET |
|  | A6 | PP-butene copolymer |
|  | A7 | PE-octene copolymer |
|  | A8 | Styrene-based elastomer |
| Compatibilizer (B) | B1 | PP/PE block copolymer |
|  | B2 | PE/PE-butylene block copolymer |
|  | B3 | PE/PP random copolymer |

[Preparation of packaging material]

(Example 1)

First and second anticorrosion treatment layers were provided to the barrier layer through the following procedure.

Specifically, (CL-1) was applied to both sides of the barrier layer by micro gravure coating at a dry coating amount of 70 mg/m$^2$, followed by baking at 200°C in a drying unit. Next, (CL-2) was applied onto the obtained layer by micro gravure coating at a dry coating amount of 20 mg/m$^2$, thereby forming composite layers of (CL-1) and (CL-2) as first and second anticorrosion treatment layers. The composite layers were ensured to exhibit an anticorrosion function by combining the two materials (CL-1) and (CL-2).

Next, the first anticorrosion treatment layer side of the barrier layer provided with the first and second anticorrosion treatment layers was bonded to the substrate layer via the first adhesive for forming the first adhesive layer, using a dry lamination method to obtain a first laminate (substrate layer / first adhesive layer / first anticorrosion treatment layer / barrier layer / second anticorrosion treatment layer). Specifically, the first adhesive was applied to the first anticorrosion treatment layer-side surface of the barrier layer so that the cured thickness would be 5 μm, followed by drying at 80°C for 1 minute, laminating the substrate layer thereto, and aging the laminate at 80°C for 120 hours to obtain a first laminate.

Next, the first laminate was set to the unwinding part of an extrusion laminator. An adhesive resin layer and a sealant layer were coextruded, for lamination, in this order from the T-die onto the second anticorrosion treatment layer of the first laminate under conditions of 270°C and 80 m/min to obtain a packaging material (laminate of substrate layer / first adhesive layer / first anticorrosion treatment layer / barrier layer / second anticorrosion treatment layer / adhesive resin layer / sealant layer). In this case, the respective thicknesses of the adhesive resin layer and the sealant layer were set to 25 μm and 55 μm.

In this case, a sealant layer-forming resin composition was prepared in advance by dryblending the base resin (A) and the compatibilizer (B) shown in Table 2 and this resin composition was used for the sealant layer. In this case, the composition of the sealant layer (types and contents of the base resin (A) and the compatibilizer (B)) was as shown in Table 2. The hydrogen sulfide gas permeability at 100°C in the thickness direction of the sealant layer and the adhesive resin layer as an adhesive layer was as shown in Table 2.

(Examples 2 to 18 and Comparative Example 1)

A packaging material was prepared as in Example 1 except that the hydrogen sulfide gas permeability at 100°C in the thickness direction of the sealant layer and the adhesive layer, and the composition of the sealant layer were set as shown in Table 2.

(Examples 19 and 20, and Comparative Examples 2 and 3)

A first laminate (substrate layer / first adhesive layer / first anticorrosion treatment layer / barrier layer / second anticorrosion treatment layer) was obtained as in Example 1.

Next, a sealant layer having a composition as shown in Table 2 was bonded onto the second anticorrosion treatment layer of the first laminate using the second adhesive for forming the second adhesive layer using a dry lamination method. In this way, a second adhesive layer as an adhesive layer and a sealant layer were formed on the first laminate.

In this case, the hydrogen sulfide gas permeability at 100°C in the thickness direction of the second adhesive layer and the sealant layer was set as shown in Table 2. The lamination between the first laminate and the sealant layer was performed by applying the second adhesive layer onto the second anticorrosion treatment layer so that the cured thickness would be 3 μm, drying the coating at 80°C for 1 minute, laminating the sealant layer thereto, and aging the laminate at 120°C for 3 hours.

Through the process described above, a packaging material (laminate of substrate layer / first adhesive layer / first anticorrosion treatment layer / barrier layer / second anticorrosion treatment layer / second adhesive layer / sealant layer) was prepared.

<Hydrogen sulfide gas permeability>

The hydrogen sulfide gas permeability at 100°C in the thickness direction of the sealant layer and the adhesive layer was measured as follows.

First, a measurement sheet with a thickness of 80 μm was prepared by heating and melting the sealant layer-forming resin composition at 200°C.

Next, a differential pressure gas permeability measuring device was set up. The differential pressure gas permeability measuring device used was a device including a first gas pipe and a second gas pipe to each of which a valve and a pressure sensor were attached, and a ceramic electric tubular furnace (model: ARF-50K, manufactured by ASH) having a heater. Using the differential pressure gas permeability measuring device, the hydrogen sulfide gas permeability of the measurement sheet was measured using a differential pressure method. Specifically, the measurement sheet, which was arranged being sandwiched between the end faces of the first and second gas pipes, was placed in the ceramic electric tubular furnace whose temperature was kept at 100°C. In this state, the hydrogen sulfide gas permeability was measured by supplying a hydrogen sulfide gas to the first gas pipe on one side of the measurement sheet so that the differential pressure between the first and second gas pipes would be 0.1 MPa, and measuring the pressure change over time of the hydrogen sulfide gas in the second gas pipe that had permeated through the measurement sheet. The results are shown in Table 2.

[Evaluation of dimensional stability]

(1) Preparation of sample

The packaging materials obtained in the examples and comparative examples were each cut into two 100 mm × 100 mm sheets.

Next, the sheets were overlapped with each other such that the sealant layers faced each other and subjected to heat sealing at a heating temperature of 220° and a surface pressure of 0.5 MPa for 10 seconds using a seal bar having a width of 10 mm. Thus, a sample having a band-shaped seal portion of 10 mm × 100 mm was prepared. Two samples were prepared for each of the examples and comparative examples.

(2) Thermal shock test

One of the two samples prepared for each of the examples and comparative examples was subjected to a thermal shock test as follows.

The sample was placed in a nitrogen-purged metal container in which the temperature was set to 100°C. Then, with the temperature dropped to -40°C in two minutes, the sample was held at this temperature for 28 minutes, and then, with the temperature raised to 100°C in two minutes, the sample was held at this temperature for 28 minutes. With this heat cycle as one cycle, 600 cycles were performed.

(3) Evaluation

The sample that had not been subjected to the thermal test was cut with a width of 10 mm in the direction perpendicular to the longitudinal direction of the band-shaped seal portion to obtain a cut piece. The cut piece obtained in this way was solidified using an epoxy resin and then polished to expose the cut surface of the cut piece, for observation using a microscope and measurement of the length of the seal portion.

For the sample that had been subjected to the thermal test also, the length of the seal portion was measured in a manner similar to the above.

Then, the contraction width was calculated based on the following formula.

$$\text{Contraction width}$$
$$= \text{Length of seal portion of sample not subjected to thermal test}$$
$$- \text{Length of seal portion of sample subjected to thermal test}$$

Based on the contraction width calculated as above and the following criterion, dimensional stability after thermal shock was evaluated. The results are shown in Table 2.

(Criterion)

A: Contraction width was less than 1 mm
B: Contraction width was 1 mm or greater and less than 2 mm.
C: Contraction width was 2 mm or greater and less than 3 mm.
D: Contraction width was 3 mm or greater.

The samples evaluated as A to C were taken to be above the pass level in terms dimensional stability after thermal shock.

[Table 2]

| | Bonding method of sealant layer to 1st laminate | Sealant layer and adhesive layer | Composition of sealant layer | | | | | | Evaluation | |
| --- | --- | --- | --- | --- | --- | --- | --- | --- | --- | --- |
| | | | | | | | | | Dimensional stability | |
| | | Hydrogen sulfide gas permeability at 100°C | Base resin (A) | | | | Compatibilizer (B) | | Evaluation | Cont. width |
| | | $(mol·m)/(m^2·s·Pa)$ | Type | Cont. (%) | Type | Cont. (%) | Type | Cont. (%) | | mm |
| E 1 | TL | $1.3×10^{-14}$ | A1 | 100 | - | - | - | - | C | 2.2 |
| E 2 | TL | $2.6×10^{-14}$ | A2 | 100 | - | - | - | - | B | 1.3 |
| E 3 | TL | $5.5×10^{-13}$ | A3 | 100 | - | - | - | - | C | 2.0 |
| E 4 | TL | $3.0×10^{-14}$ | A1 | 90 | A6 | 5 | B1 | 5 | B | 1.0 |
| E 5 | TL | $4.0×10^{-14}$ | A2 | 90 | A6 | 5 | B1 | 5 | A | 0.6 |
| E 6 | TL | $1.1×10^{-13}$ | A1 | 80 | A6 | 10 | B1 | 10 | A | 0.1 |
| E 7 | TL | $3.1×10^{13}$ | A1 | 60 | A6 | 20 | B1 | 20 | B | 1.5 |
| E 8 | TL | $1.5×10^{-13}$ | A1 | 80 | A6 | 10 | B2 | 10 | A | 0.3 |
| E9 | TL | $1.3×10^{-13}$ | A1 | 80 | A7 | 10 | B1 | 10 | A | 0.2 |
| E 10 | TL | $1.8×10^{-13}$ | A1 | 80 | A7 | 10 | B2 | 10 | A | 0.6 |
| E 11 | TL | $1.1×10^{-13}$ | A1 | 80 | A6 | 5 | B1 | 15 | A | 0.1 |
| E 12 | TL | $1.7×10^{-13}$ | A1 | 80 | A7 | 5 | B2 | 15 | A | 0.5 |
| E 13 | TL | $2.9×10^{-14}$ | A1 | 80 | - | - | B1 | 20 | B | 1.2 |
| E 14 | TL | $3.0×10^{-14}$ | A1 | 80 | - | - | B2 | 20 | B | 1.1 |
| E 15 | TL | $2.8×10^{-13}$ | A1 | 80 | A6 | 20 | - | - | B | 1.3 |
| E 16 | TL | $3.0×10^{-13}$ | A1 | 80 | A7 | 20 | - | - | B | 1.1 |
| E 17 | TL | $1.3×10^{-14}$ | A1 | 80 | A8 | 20 | - | - | C | 2.2 |
| E 18 | TL | $2.4×10^{-13}$ | A1 | 80 | A6 | 10 | B3 | 10 | B | 1.0 |
| E 19 | DL | $1.1×10^{-13}$ | A1 | 80 | B1 | 10 | B1 | 10 | A | 0.2 |
| E 20 | DL | $1.9×10^{-13}$ | A1 | 80 | B2 | 10 | B2 | 10 | A | 0.6 |
| CE 1 | TL | $2.0×10^{-12}$ | A1 | 20 | B1 | 80 | - | - | D | 3.5 |
| CE 2 | DL | $1.9×10^{-12}$ | A4 | 100 | - | - | - | - | D | 3.4 |

(continued)

| | Bonding method of sealant layer to 1st laminate | Sealant layer and adhesive layer | Composition of sealant layer | | | | | | Evaluation | |
|---|---|---|---|---|---|---|---|---|---|---|
| | | | | | | | | | Dimensional stability | |
| | | Hydrogen sulfide gas permeability at 100°C | Base resin (A) | | | | Compatibilizer (B) | | Evaluation | Cont. width |
| | | $(mol·m)/(m^2·s·Pa)$ | Type | Cont. (%) | Type | Cont. (%) | Type | Cont. (%) | | mm |
| CE 3 | DL | $3.5×10^{-15}$ | A5 | 100 | - | - | - | - | D | 3.2 |

E: Example
CE: Comparative Example
TL: Thermal Lamination
DL: Dry Lamination
Cont. (%): Content (mass%)
Cont. width: Contraction width

As can be seen from the results shown in Table 2, the packaging materials of Examples 1 to 20 were evaluated as A, B or C for dimensional stability after thermal shock. However, the packaging materials of Comparative Examples 1 to 3 were all evaluated as D for dimensional stability after thermal shock.

As described above, according to the packaging material of the present disclosure, it was confirmed that the dimensional stability of the seal portion formed using the packaging material could be improved even after a thermal shock.

[Reference Signs List]

| | |
|---|---|
| 10, 20 | Packaging material |
| 11 | Substrate layer |
| 12b | Second adhesive layer (adhesive layer) |
| 13 | Barrier layer |
| 15 | Adhesive resin layer (adhesive layer) |
| 16 | Sealant layer |
| 50 | Solid-state battery (power storage device) |
| 52 | Power storage element |
| 54 | Packaging bag |
| 54a | Bag body |
| 54b | Seal portion |

**Claims**

1.  A packaging material for a power storage device comprising

    at least a substrate layer, a barrier layer, an adhesive layer, and a sealant layer in this order, wherein
    a hydrogen sulfide gas permeability at 100°C in a thickness direction of the sealant layer and the adhesive layer is
    $3.7×10^{-15}$ to $1.8×10^{-12}$ $[(mol·m)/(m^2·s·Pa)]$.

2.  The packaging material for a power storage device according to claim 1, wherein, when a cross section of the sealant layer is observed using a scanning electron microscope, a sea-island structure having a sea area and islands in the sea area is observed.

3.  The packaging material for a power storage device according to claim 1, wherein the sealant layer contains a base resin (A) comprising a polyolefin resin.

4.  The packaging material for a power storage device according to claim 3, wherein the polyolefin resin comprises a polypropylene resin and a polyethylene resin.

5. The packaging material for a power storage device according to claim 4, wherein the sealant layer further contains a compatibilizer (B) having portions compatible with the polypropylene resin and portions compatible with the polyethylene resin.

6. The packaging material for a power storage device according to claim 5, wherein the compatibilizer (B) comprises at least either of a block copolymer (B1) of polypropylene and polyethylene and a block copolymer (B2) of polyethylene and polyethylenebutylene.

7. The packaging material for a power storage device according to claim 5, wherein a content of the compatibilizer (B) in the sealant layer is 2 to 30 mass%.

8. The packaging material for a power storage device according to any one of claims 1 to 7, wherein the power storage device is a solid-state battery.

9. A power storage device comprising

   a power storage element; and
   a packaging bag accommodating the power storage element, wherein
   the packaging bag is formed using the packaging material according to any one of claims 1 to 7 so as to have a bag body and a seal portion provided to the bag body.

10. The power storage device according to claim 9, wherein the power storage device is a solid-state battery.

FIG.1

FIG.2

FIG.3

# FIG.4

# INTERNATIONAL SEARCH REPORT

| International application No. |
|---|
| **PCT/JP2024/003552** |

### A. CLASSIFICATION OF SUBJECT MATTER

*H01M 50/131*(2021.01)i; *B32B 7/02*(2019.01)i; *B32B 27/32*(2006.01)i; *H01M 10/052*(2010.01)i; *H01M 10/0562*(2010.01)i; *H01M 50/105*(2021.01)i; *H01M 50/121*(2021.01)i; *H01M 50/129*(2021.01)i; *H01M 50/184*(2021.01)i

FI: H01M50/131; H01M50/129; H01M50/121; H01M50/105; H01M10/0562; H01M10/052; H01M50/184 C; B32B7/02; B32B27/32 Z

According to International Patent Classification (IPC) or to both national classification and IPC

### B. FIELDS SEARCHED

Minimum documentation searched (classification system followed by classification symbols)

H01M50/131; B32B7/02; B32B27/32; H01M10/052; H01M10/0562; H01M50/105; H01M50/121; H01M50/129; H01M50/184

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/153456 A1 (DAI NIPPON PRINTING CO., LTD.) 30 July 2020 (2020-07-30) claim 1, examples 1-2, table 1 | 1-10 |
| A | WO 2023/017837 A1 (SHOWA DENKO PACKAGING CO., LTD.) 16 February 2023 (2023-02-16) claims 1-7, examples 1-17 | 1-10 |
| A | WO 2021/010457 A1 (DAI NIPPON PRINTING CO., LTD.) 21 January 2021 (2021-01-21) claims 1-7, paragraphs [0072]-[0117] | 1-10 |
| A | WO 2022/270548 A1 (TOPPAN PRINTING CO., LTD.) 29 December 2022 (2022-12-29) claim 1, paragraphs [0009]-[0013] | 1-10 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **11 April 2024** | **23 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/003552**

| Patent document cited in search report | | | Publication date (day/month/year) | Patent family member(s) | | | Publication date (day/month/year) |
|---|---|---|---|---|---|---|---|
| WO | 2020/153456 | A1 | 30 July 2020 | US 2022/0069390 A1 claim 1, examples 1-2, table 1 EP 3916875 A1 CN 113330620 A KR 10-2021-0116441 A | | | |
| WO | 2023/017837 | A1 | 16 February 2023 | WO 2023/017683 A1 | | | |
| WO | 2021/010457 | A1 | 21 January 2021 | US 2022/0278397 A1 claims 1-7, paragraphs [0084]-[0132] CN 114128015 A KR 10-2022-0035371 A | | | |
| WO | 2022/270548 | A1 | 29 December 2022 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013101765 A